# EUROPEAN PATENT SPECIFICATION

(11) **EP 3 504 116 B1**
(45) Date of publication and mention of the grant of the patent: **30.09.2020**
(21) Application number: 16760762.1
(22) Date of filing: 23.08.2016
(51) Int. Cl.: B63B 17/00, B63J 2/10, B63H 21/32

(54) **USE OF GASEOUS FUEL IN MARINE VESSELS**
VERWENDUNG VON GASFÖRMIGEM BRENNSTOFF IN WASSERFAHRZEUGEN
UTILISATION DE COMBUSTIBLE GAZEUX DANS DES NAVIRES

(43) Date of publication of application: 03.07.2019
(73) Proprietor: Wärtsilä Finland Oy, 65100 Vaasa (FI)
(72) Inventor: WIDJESKOG, Klaus, FI-65380 Vaasa (FI); JANSSON, Mathias, FI-65380 Vaasa (FI)
(74) Representative: Genip Oy
(86) International application number: PCT/FI2016/050575
(87) International publication number: WO 2018/037150

(56) References cited:
- WO-A1-2007/147931
- GB-A- 576 958
- GB-A- 2 481 983
- US-A- 5 732 644
- US-A1- 2015 158 557

## Description

### Technical field

The present invention relates to marine vessel according to the preamble of claim 1.

Invention relates also to a fluid passing shaft for conveying multiple parallel fluid ducts in a marine vessel between different horizontal levels in the vessel.

### Background art

Using of gaseous fuel in marine vessels has become more and more interesting due to its capability of clean combustion and low exhaust gas emissions. On the other hand gas is very easily flammable and storing and using gas as a fuel poses an increased safety risks which are coped with various precautionary measures and safety rule which must be obeyed.

Gas consumers and the gas tanks are typically at different compartments in the vessel. And particularly when the gas tank is intended to store fuel gas for the gas consumer in the vessel only i.e. is it not a cargo tank, the tanks are typically arranged to a different horizontal level than the gas consumer in the vessel. A gas consumer may be a power plant for producing propulsion power to the vessel or for auxiliary equipment, so called hotel power. The gas consumer comprises often an internal combustion piston engine using gaseous fuel.

WO2007147931 A1 is cited as an example of a fuel tank arrangement in a marine vessel. The document discloses a marine vessel operated with gaseous fuel having at least one gas powered engine provided with a fuel tank arrangement in which the fuel is stored in liquid phase. In the vessel the engine is positioned in an engine room which is provided with an engine room casing extending from the engine room to exterior of the vessel. The fuel tank arrangement is arranged in vicinity of the engine room casing. This way the tank arrangement may be located in a space which is easily ventilated upwards in the vessel.

GB 2 481 983 discloses a ship including a tank room for holding at least one gas storage tank, the tank room including a conduit extending from said tank room to the open air outside said ship for allowing the venting of gas in the event of a leak from a storage tank held in said tank room. The conduit may lead to open air at the top of the ship, with the upper end of the conduit substantially level with the top of any superstructure present on the ship.

US 2015/158557 A1 discloses a floating vessel comprising a body structure, a tank for storing a liquid, and at least one pipe connected to the tank. The floating vessel further comprises a tunnel having a first end portion and a second end portion extending through the body structure. The tunnel is arranged in open connection to an ambient environment of the floating vessel. There is at least one pipe connected to the tank extending at least partially through the tunnel.

An object of the invention is to provide a marine vessel in which the performance is considerably improved compared to the prior art solutions.

An object of the invention is to provide a novel arrangement in marine vessel in which fluid ducts between different horizontal levels in the vessel may be efficiently conveyed.

### Disclosure of the Invention

The objects of the invention can be met substantially as is disclosed in the independent claim and in the other claims describing more details of different embodiments of the invention.

According to an embodiment of the invention a marine vessel is provided with at least one gas fuel consumer arranged at a first horizontal level in the vessel and at least one gas tank for the gas fuel consumer is arranged at a second horizontal level in the vessel. The vessel is provided with a fluid passing shaft arranged to extend between the first and the second horizontal levels, and the fluid passing shaft comprises at least one gas conduit arranged to extend via the fluid passing shaft from the at least one gas tank to the at least one gas fuel consumer.

This provides very compact unit for passing various fluids between different horizontal levels in a marine vessel. Also weight and amount of piping is minimized and thermal losses are minimal or thermal energy exchange is made possible.

According to an embodiment of the invention the fluid passing shaft is a self-supporting structure.

This way the fluid passing shaft may be prefabricated and hauled as an entity to a space provided in a marine vessel.

According to an embodiment of the invention the fluid passing shaft is comprises a vertically extending part and laterally extending part. The laterally extending part may also be referred to as a horizontally extending part.

The laterally extending part of the fluid passing shaft is arranged to at least partly support the gas consumers of the vessel.

According to an embodiment of the invention the at least one gas tank of the vessel is supported by vertically extending part of the fluid passing shaft.

According to an embodiment of the invention the fluid passing shaft comprises a support frame and an enclosure surrounding the support frame forming a shaft.

According to an embodiment of the invention that the enclosure is a heat insulation enclosure.

According to an embodiment of the invention the fluid passing shaft is arranged to vertically extend from a machine room of the vessel to outside of the vessel. The machine room is arranged to enclose one or more engines of the vessel.

According to an embodiment of the invention the laterally extending part comprises one unit extending under each one of the engines.

According to an embodiment of the invention the laterally extending part comprises number of units each extending under one of the engines.

According to an embodiment of the invention the support frame is provided with gas tight walls and the at least one gas conduit is arranged to extend inside the support frame from the at least one gas tank to the at least one gas fuel consumer.

According to an embodiment of the invention the fluid passing shaft comprises an air inlet duct for feeding air to the gas consumers. Optionally when feeding air to an engine in the vessel the fluid passing shaft comprises a heat transfer means thermally operating between the air and cold gas and thus precooling the air prior to turbocharger of the engine increasing the efficiency of the compressor.

According to an embodiment of the invention an exhaust gas system of the gas consumers is outside of the fluid passing shaft and the fluid passing shaft comprises a connection interface configured to fluidly connect a heat exchanger in the gas conduit with the exhaust gas system.

According to an embodiment of the invention the fluid passing shaft comprises an exhaust gas duct for the gas consumer.

Considerable advantages are achieved by the present invention. Normally separately located double wall pipes are heavy, together with supporting. This causes e.g. vibration, insulation, sealing problems. Normally it's very hard to find space for these. When integrating such systems, weight and space is saved. For retrofit solutions where a diesel machinery is retrofitted to operate as gas engine the invention provides a space saving solution.

The system according to the invention enables efficient obeying any safety and other rules. The benefits of the invention are obtainable in most straightforward manner in connection with gases that are lighter than the air and will evaporate upwards.

Additionally the total system weight is lower compared to systems where piping is taken independently from tank going through several individual equipment. Also the modularity and possibility of high grade factory assemble preparation, testing and approval at factory shortens the assembly and installation time at site onboard.

By means of the invention it is possible to arrange heat exchange from gas streams of the engine to evaporating of gas with only minor efforts

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a marine vessel provided with a fluid passing shaft according to an embodiment of the invention,
Figure 2 illustrates a fluid passing shaft according to an embodiment of the invention,
Figure 3 illustrates a marine vessel provided with a fluid passing shaft according to an embodiment of the invention,
Figure 4 illustrates a marine vessel provided with a fluid passing shaft according to another embodiment of the invention and
Figure 5 illustrates a marine vessel provided with a fluid passing shaft according to still another embodiment of the invention.

### Detailed Description of Drawings

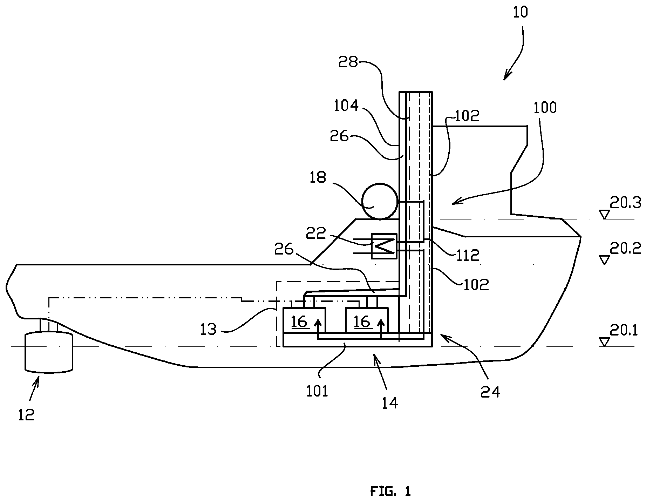

Figure 1 depicts schematically a marine vessel 10, more particularly a work vessel, demonstrating an exemplary application of the invention. The vessel is provided with an electric propulsion system 12 with separate power plant 14 for supplying power to the propulsion system 12. The power plant comprises one or more internal combustion engines 16 adapted to combust gaseous fuel, such as LNG, LPG or hydrogen. The vessel is provided with at least one gas tank 18 for storing the fuel in liquefied form needed for operating the engines of the power plant 14 and thus the propulsion system 12. The power plant may be configured serve power to other utilities of the vessel also, and therefore it is referred to also as a gas fuel consumer in this connection. Thus, the word gas consumer may refer to one or more engines belonging to the power plant, as well as to a boiler or a fuel cell arranged to the vessel. Particularly, the tank is adapted to store liquefied gas such as LNG or LPG, or alike.

The marine vessel 10 has several horizontal levels 20.1, 20.2, etc., which may be referred to as decks also. It is also conceivable that a horizontal level is assigned between two actual decks of the vessel 10 in the sense of the invention. The terms horizontal and vertical should be understood not necessarily mean absolute horizontal or vertical direction but to be related to the bound to the vessel. Now, the gas fuel consumers 16 are arranged at a first horizontal level 20.1, here in a machine room 13 of the vessel 10. The at least one gas tank 18 for the gas consumers 16 of the vessel is arranged at another, different horizontal level 20.3 which is referred to as a second horizontal level. The vessel 10 is provided with fuel feeding system 24 arranged to deliver fuel to the engines 16 in gaseous form. The fuel feeding system 24 connects the tank 18 to the gas consumers 16. The fuel feeding system 24 is also provided with a gas evaporation unit 22 which may be referred to generally as a heat exchanger 22 for transferring heat to the gas. The gas evaporation unit 22 is here arranged at a third horizontal level 20.2. As can be seen in the figure, the order number of the horizontal level mentioned here does not necessarily relate to the actual order of the units in the vessel. The terms horizontal and vertical are used here in respect to the hull of the vessel when the vessel floating undisturbed.

The figure 1 the vessel 10 depicts also a fluid passing shaft 100 according to an embodiment of the invention. The fluid passing shaft 100 is arranged to extend substantially vertically between the first horizontal level 20.1 and the second horizontal level 20.3 in the vessel. The fluid passing shaft 100 is comprised of a support frame, using schematic reference 102 in the figure 1, for supporting the fluid passing shaft and an enclosure 104. The fluid passing shaft 100 is a self-supporting structure which can be manufactured separately and hauled into the vessel 10 as an entity. The fluid passing shaft forms a confined space inside the vessel 10 leading from the first horizontal level 20.1 to the second horizontal level 20.3 and further to outside the vessel 10. This way the space in the shaft via which the gas conduits are led from on horizontal level to the other may be ventilated to the surroundings. The fluid passing shaft 100 may be fastened rigidly or flexibly with thermal expansion joints allowing movement to the actual deck structure of the vessel 100.

The engines 16 are provided with an exhaust gas system 26 which is here also integrated into the fluid passing shaft 100.

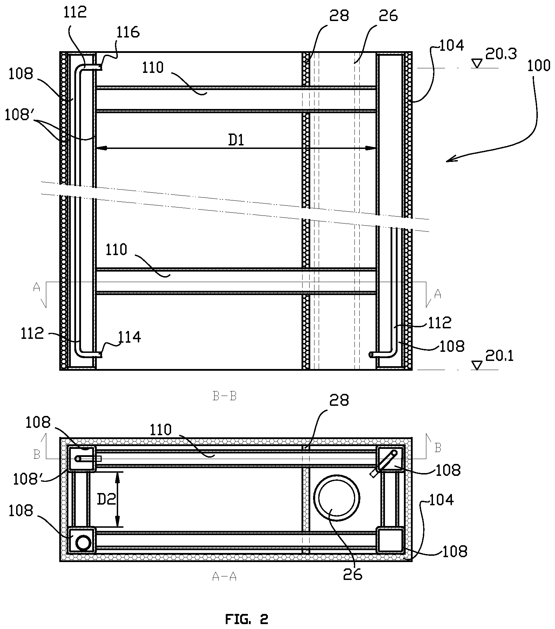

In the figure 2 there is shown a section of the self-supporting fluid passing shaft 100 illustrating a principle of a concept of the invention. The fluid passing shaft 100 comprises a support frame 102 formed by longitudinal beams 108 and e.g. transverse girders 110. The girders 110 are used for fixing the beams 108 rigidly with each other by welding the girders between the beams. The beams 108 are arranged at a distance D1, D2 from each other. In the figure 2 the beams have a constant distance between each other in the longitudinal direction of the fluid passage shaft i.e. they are parallel to each other. This is only an optional feature and the beams may be arranged side by side at a non-constant distance from each other, depending on the case.

The fluid passing shaft 100 is also provided with an enclosure 104 forming a confined space inside the shaft extending in the direction of beams 108. The enclosure is formed of heat insulating walls or panels. Generally speaking, the beam 108 has a length which is greater than its sideways dimension, such as width or diameter. By the insulation it is ensured e.g. that that possible leakage of gas in liquefied phase may not cause damages to the structures of the vessel.

In the fluid passing shaft 100 there is at least one beam 108 which is hollow and is provided with gas tight walls 108'. Such a beam 108 is provided with at least one separate conduit 112 inside thereof. The conduit 112 on the left side of the sectional view B-B in the figure 2 extends from a longitudinal location of the shaft 100 corresponding to the first horizontal level 20.1, all that way to another longitudinal location corresponding to the second horizontal level 20.3 in the figure 1. The conduit 112 on the right side of the sectional view B-B in the figure 2 extends from a longitudinal location to another intermediate location now shown in the figure 2. The conduit 112 is separated from the space of the beam 108 such that the conduit serves for normal flow channel for the gas and the wall of the beam serves as security barrier for collecting possible leakage from the conduit 112. The space inside the beam is connected to a system for receiving leakage gas (not shown) to handle any leakage appropriately. The conduit 112 has its inner space separate in gas tight manner from the inner space of the beam 108.

The conduit 112 is provided with a first connector 114 at its first end and a second connector 116 at its second end. Both the connectors 114, 116 are arranged to extend through the wall 108' of the beam 108 such that the inner space of the beam remains gas tight at the location of the lead through, and separate from the conduit 112. The connectors are shown here in very simplified manner and it should be understood that there are various possibilities to provide the desired gas tightness and connectability conceivable within the scope of the invention.

In the embodiment of the figure 2 the fluid passing shaft 100 comprises at least four beams 108 arranged at the corners of the shaft 100 and therefore the shaft has its cross section A-A of rectangular shape.

The fluid passing shaft according to the embodiment of figure 1 and 2 is provided with integrated exhaust gas duct 26 of the engines 16. In this embodiment the shaft is divided into two partial shafts by an intermediate wall 28.

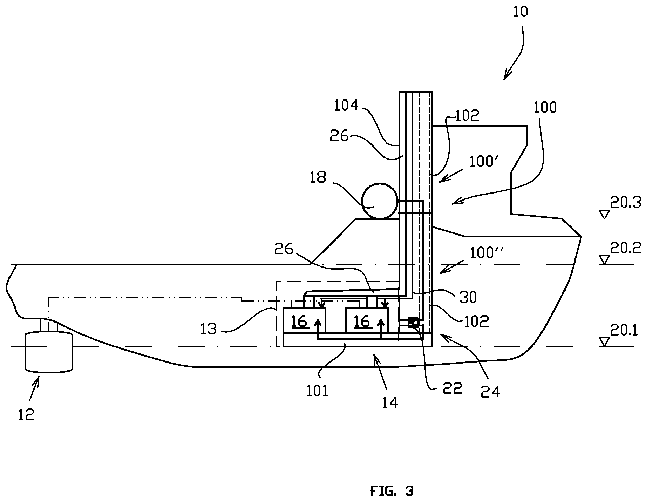

Marine vessel in the embodiment of figure 3 shaft depicts further a combustion air intake duct 30 arranged to extend via the shaft 100 from outside the vessel to the first horizontal level 20.1 and to further to the engines 16 directly or indirectly via the machine room 13 space. This makes it possible to provide a possibility to cool combustion air and at same time evaporating liquefied gas by arranging thermal exchange between the fluids.

The fluid passing shaft is advantageously assembled from modules 100', 100" as is depicted in the figure 3. The modules are arranged for example of suitable size for transportation. Also one of the modules 100" may be adapted for installation inside the vessel whereas the other one may be adapted for installation outside the vessel coping with the elements, having weather proof outer material.

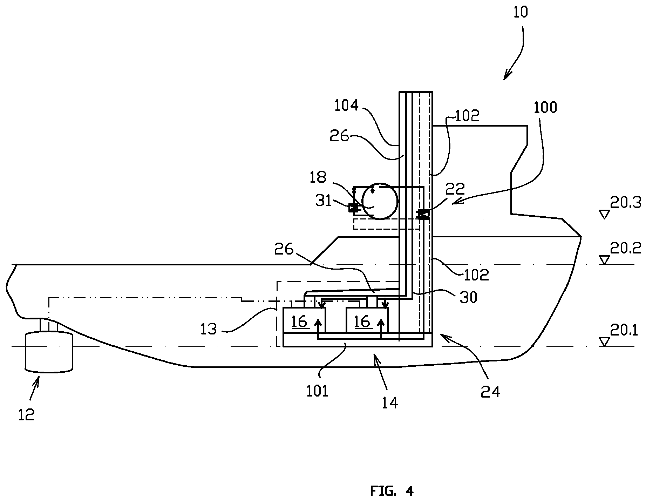

The versatility of the gas passing shaft 100 is demonstrated in the figure 4 where a marine vessel 10 otherwise similar to that shown in figure 1 is shown but where a pressure build up unit 31 and/or a gas evaporator unit 22 of the fuel feeding system 24 are positioned adjacent to or in the fluid passing shaft 100 at the second horizontal level 20.3. Additionally the at least one gas tank 18, the pressure build up system 31 and gas evaporator unit 22 of the vessel are supported by the support frame 102 of the fluid passing shaft 10. The pressure build up unit 31 is arranged to maintain a desired pressure in the gas tank 18 by controllably evaporate the liquefied gas in the tank 18 and leading the evaporated gas back to the tank 18.

The gas passing shaft 100 may be efficiently prefabricated in a factory and the installation to a vessel comprise steps of providing a space for the shaft in the vessel and hauling the shaft 100 to its place, fixing the shaft to the hull of the vessel and connecting the conduits in the shaft to the respective ones in the vessel. Therefore installation and commissioning time is saved at yard considerably.

According to an embodiment of the invention the fluid passing shaft is comprised of a vertically extending part 102 and laterally extending part 101. This way the shaft may be used for passing fluids, such as fuel gas and/or combustion air in confined space into proximity of the engines. The vertically extending part 102 and the laterally extending part 101 form a common and continuous space inside the shaft 100. The laterally extending fluid passing shaft part 101 may be arranged at least partly support the engines. The laterally extending fluid passing shaft 101 is arranged under the gas consumer i.e. the power plant. It is arranged to be a self-supporting structure which supports the engines 16 of the power plant and provides a space and channels for passing fluid channels from the vertical fluid passing shaft to the engines in lateral direction.

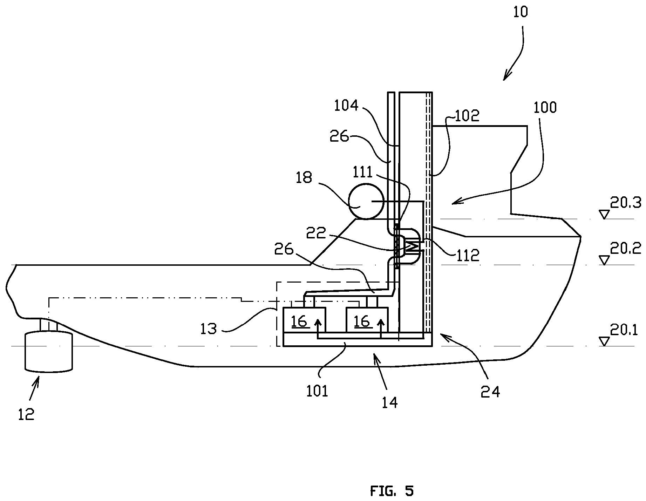

In the figure 5 there is shown a marine vessel 10 otherwise similar to that shown in figure 1 but where the exhaust gas system 26 of the gas consumers 16 is outside of the fluid passing shaft 100. The heat exchanger 22 for transferring heat to the gas connected to the gas conduit 112 is arranged to cool the exhaust gas of the gas fuel consumer 16. The fluid passing shaft 100 is provided with a coupling interface 111 configured to fluidly connect the heat exchanger 22 with the exhaust gas system 26. Alternatively or additionally the fluid passing shaft may be provide with respective coupling interface configured to fluidly connect the heat exchanger 22 with a combustion air intake duct 30 when being led to the gas consumers 14 outside the gas passing shaft.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A marine vessel in which at least one gas fuel consumer (16) is arranged at a first horizontal level (20.1) in the vessel and at least one gas tank (18) for the gas fuel consumer (16) is arranged at a second horizontal level (20.3) in the vessel, and the vessel (10) is provided with a fluid passing shaft (100) comprising a vertically extending part (102) arranged to extend between the first and the second horizontal levels (20.1, 20.3), and the fluid passing shaft comprises at least one gas conduit (112) arranged to extend via the fluid passing shaft (100) from the at least one gas tank (18) to the at least one gas fuel consumer (16), **characterized in that** the fluid passing shaft comprises a laterally extending part (101) which is arranged to at least partly support the gas consumers (16) of the vessel (10).

2. A marine vessel according to claim 1, **characterized in that** the fluid passing shaft (100) is a self-supporting structure.

3. A marine vessel according to claim 1, **characterized in that** the at least one gas tank (18) of the vessel is supported by vertically extending part (102) of the fluid passing shaft (100).

4. A marine vessel according to claim 2, **characterized in that** the fluid passing shaft comprises a support frame (102) and an enclosure surrounding the support frame forming a shaft (100).

5. A marine vessel according to claim 4, **characterized in that** the enclosure is a heat insulation enclosure.

6. A marine vessel according to claim 1, **characterized in that** the fluid passing shaft (100) is arranged to vertically extend from a machine room (13) of the vessel to outside of the vessel.

7. A marine vessel according to claim 4, **characterized in that** the laterally extending part (101) comprises one unit extending under each one of the engines.

8. A marine vessel according to claim 1, **characterized in that** the laterally extending part (101) comprises number of units each extending under one of the engines.

9. A marine vessel according to claim 4, **characterized in that** the support frame is provided with gas tight walls and the at least one gas conduit is arranged to extend inside the support frame from the at least one gas tank (18) to the at least one gas fuel consumer (16).

10. A marine vessel according to claim 1, **characterized in that** the fluid passing shaft comprises an air inlet duct for feeding air to the gas consumers (16).

11. A marine vessel according to claim 1, **characterized in that** the fluid passing shaft comprises an exhaust gas duct for the gas consumer (16).

12. A marine vessel according to claim 1, **characterized in that** an exhaust gas system (26) of the gas consumers (16) is outside of the fluid passing shaft 100 and the fluid passing shaft comprises a connection interface (111) configured to fluidly connect a heat exchanger (22) in the gas conduit (112) with the exhaust gas system (26).

## Patentansprüche

1. Wasserfahrzeug, in welchem mindestens ein Gasbrennstoff-Verbraucher (16) in einer ersten horizontalen Ebene (20.1) in dem Fahrzeug angeordnet ist und mindestens ein Gastank (18) für den Gasbrennstoff-Verbraucher (16) in einer zweiten horizontalen Ebene (20.3) in dem Fahrzeug angeordnet ist und das Fahrzeug (10) mit einem Fluiddurchgangsschacht (100) versehen ist, der einen sich vertikal erstreckenden Teil (102) umfasst, welcher derart angeordnet ist, dass er sich zwischen der ersten und der zweiten horizontalen Ebene (20.1, 20.3) erstreckt, und der Fluiddurchgangsschacht mindestens eine Gasleitung (112) umfasst, die derart angeordnet ist, dass sie sich über den Fluiddurchgangsschacht (100) von dem mindestens einen Gastank (18) zu dem mindestens einen Gasbrennstoff-Verbraucher (16) erstreckt, **dadurch gekennzeichnet, dass** der Fluiddurchgangsschacht einen sich seitlich erstreckenden Teil (101) umfasst, welcher derart angeordnet ist, dass er die Gasverbraucher (16) des Fahrzeugs (10) zumindest teilweise trägt.

2. Wasserfahrzeug nach Anspruch 1, **dadurch gekennzeichnet, dass** der Fluiddurchgangsschacht (100) eine selbsttragende Struktur ist.

3. Wasserfahrzeug nach Anspruch 1, **dadurch gekennzeichnet, dass** der mindestens eine Gastank (18) des Fahrzeugs durch den sich vertikal erstreckenden Teil (102) des Fluiddurchgangsschachts (100) getragen wird.

4. Wasserfahrzeug nach Anspruch 2, **dadurch gekennzeichnet, dass** der Fluiddurchgangsschacht einen Tragrahmen (102) und ein Gehäuse, welches den Tragrahmen umgibt, umfasst, wodurch der Schacht (100) gebildet wird.

5. Wasserfahrzeug nach Anspruch 4, **dadurch gekennzeichnet, dass** das Gehäuse ein Wärmedämmungsgehäuse ist.

6. Wasserfahrzeug nach Anspruch 1, **dadurch gekennzeichnet, dass** der Fluiddurchgangsschacht (100) derart angeordnet ist, dass er sich vertikal von einem Maschinenraum (13) des Fahrzeugs nach außerhalb des Fahrzeugs erstreckt.

7. Wasserfahrzeug nach Anspruch 4, **dadurch gekennzeichnet, dass** der sich seitlich erstreckende Teil (101) eine Einheit umfasst, die sich bis unter jeden der Motoren erstreckt.

8. Wasserfahrzeug nach Anspruch 1, **dadurch gekennzeichnet, dass** der sich seitlich erstreckende Teil (101) eine Reihe von Einheiten umfasst, die sich jeweils bis unter einen der Motoren erstrecken.

9. Wasserfahrzeug nach Anspruch 4, **dadurch gekennzeichnet, dass** der Tragrahmen mit gasdichten Wänden versehen ist und die mindestens eine Gasleitung derart angeordnet ist, dass sie sich im Inneren des Tragrahmens von dem mindestens einen Gastank (18) zu dem mindestens einen Gasbrennstoff-Verbraucher (16) erstreckt.

10. Wasserfahrzeug nach Anspruch 1, **dadurch gekennzeichnet, dass** der Fluiddurchgangsschacht einen Lufteinlasskanal zum Zuführen von Luft zu den Gasverbrauchern (16) umfasst.

11. Wasserfahrzeug nach Anspruch 1, **dadurch gekennzeichnet, dass** der Fluiddurchgangsschacht einen Abgaskanal für den Gasverbraucher (16) umfasst.

12. Wasserfahrzeug nach Anspruch 1, **dadurch gekennzeichnet, dass** sich ein Abgassystem (26) der Gasverbraucher (16) außerhalb des Fluiddurchgangsschachts (100) befindet und der Fluiddurchgangsschacht eine Verbindungsschnittstelle (111) umfasst, die zum fluidischen Verbinden eines Wärmetauschers (22) in der Gasleitung (112) mit dem Abgassystem (26) konfiguriert ist.

## Revendications

1. Navire dans lequel au moins un consommateur de combustible gazeux (16) est disposé à un premier niveau horizontal (20.1) dans le navire et au moins un réservoir de gaz (18) pour le consommateur de combustible gazeux (16) est disposé à un deuxième niveau horizontal (20.3) dans le navire, et le navire (10) est doté d'un arbre de passage de fluide (100) comprenant une partie s'étendant verticalement (102) disposée de manière à s'étendre entre les premier et deuxième niveaux horizontaux (20.1, 20.3), et l'arbre de passage de fluide comprend au moins un conduit de gaz (112) disposé de manière à s'étendre de l'au moins un réservoir de gaz (18) à l'au moins un consommateur de combustible gazeux (16) en via l'arbre de passage de fluide (100), **caractérisé en ce que** l'arbre de passage de fluide comprend une partie s'étendant latéralement (101), laquelle est conçue pour supporter au moins partiellement les consommateurs de gaz (16) du navire (10) .

2. Navire selon la revendication 1, **caractérisé en ce que** l'arbre de passage de fluide (100) est une structure autoportante.

3. Navire selon la revendication 1, **caractérisé en ce que** l'au moins un réservoir de gaz (18) du navire est supporté par une partie s'étendant verticalement (102) de l'arbre de passage de fluide (100).

4. Navire selon la revendication 2, **caractérisé en ce que** l'arbre de passage de fluide comprend un cadre de support (102) et une enceinte entourant le cadre de support formant un arbre (100).

5. Navire selon la revendication 4, **caractérisé en ce que** l'enceinte est une enceinte d'isolation thermique.

6. Navire selon la revendication 1, **caractérisé en ce que** l'arbre de passage de fluide (100) est disposé de manière à s'étendre verticalement à partir d'un local des machines (13) du navire jusqu'à l'extérieur du navire.

7. Navire selon la revendication 4, **caractérisé en ce que** la partie s'étendant latéralement (101) comprend une unité s'étendant sous chacun des moteurs.

8. Navire selon la revendication 1, **caractérisé en ce que** la partie s'étendant latéralement (101) comprend plusieurs unités s'étendant sous l'un des moteurs.

9. Navire selon la revendication 4, **caractérisé en ce que** le cadre de support est doté de parois étanches au gaz et l'au moins un conduit de gaz est disposé de manière à s'étendre à l'intérieur du cadre de support à partir de l'au moins un réservoir de gaz (18) jusqu'à l'au moins un consommateur de combustible gazeux (16).

10. Navire selon la revendication 1, **caractérisé en ce que** l'arbre de passage de fluide comprend une conduite d'entrée pour l'alimentation en air des consommateurs de gaz (16).

11. Navire selon la revendication 1, **caractérisé en ce que** l'arbre de passage de fluide comprend une conduite de gaz d'échappement pour le consommateur de gaz (16).

12. Navire selon la revendication 1, **caractérisé en ce qu'**un système de gaz d'échappement (26) des consommateurs de gaz (16) se trouve à l'extérieur de l'arbre de passage de fluide (100) et l'arbre de passage de fluide comprend une interface de connexion (111) configurée pour relier fluidiquement un échangeur de chaleur (22) dans le conduit de gaz (112) avec le système de gaz d'échappement (26).
